# EUROPÄISCHE PATENTSCHRIFT

(11) **EP 2 268 375 B1**
(45) Veröffentlichungstag und Bekanntmachung des Hinweises auf die Patenterteilung: **22.03.2017**
(21) Anmeldenummer: 09733030.2
(22) Anmeldetag: 07.04.2009
(51) Int. Cl.: B01D 63/08, B01D 69/06

(54) **FILTERVERBUNDMATERIAL, VERFAHREN ZU SEINER HERSTELLUNG SOWIE AUS DEM FILTERVERBUNDMATERIAL HERGESTELLTE FLACHFILTERELEMENTE**
FILTER COMPOUND MATERIAL, METHOD FOR THE PRODUCTION THEREOF AND FLAT FILTER ELEMENTS MADE OF THE FILTER COMPOUND MATERIAL
MATÉRIAU COMPOSITE FILTRANT, SON PROCÉDÉ DE FABRICATION, AINSI QU'ÉLÉMENTS FILTRANTS PLATS FABRIQUÉS À PARTIR DU MATÉRIAU COMPOSITE FILTRANT

(30) Priorität: 15.04.2008 DE 102008019085
(43) Veröffentlichungstag der Anmeldung: 05.01.2011
(73) Patentinhaber: Microdyn-Nadir GmbH, 65203 Wiesbaden (DE)
(72) Erfinder: MEYER-BLUMENROTH, Ulrich, 65510 Idstein-Wörsdorf (DE); MAN, Eugen, 56355 Hunzel (DE); VOIGT, Reinhard, 99867 Gotha (DE)
(74) Vertreter: Plate, Jürgen
(86) Internationale Anmeldenummer: PCT/EP2009/002543
(87) Internationale Veröffentlichungsnummer: WO 2009/127345

(56) Entgegenhaltungen:
- WO-A-99/18033
- WO-A-99/36150
- WO-A-2004/007190
- DE-A1- 3 712 872

## Beschreibung

Die Erfindung betrifft ein Filterverbundmaterial umfassend ein Drainagegewebe und eine erste und zweite Filtrationsmembran, die mit der Ober- und Unterseite des Drainagegewebes laminiert sind sowie ein Verfahren zur Herstellung des Filterverbundmaterials und daraus hergestellte Flachfilterelemente.

Filterverbundmaterialien sind im Stand derTechnik bekannt und werden zur Herstellung von Flachfilterelementen, Wickelfiltern und dergleichen verwendet. Herkömmliche Filtersysteme zur Abwasserreinigung beinhalten Flachfilterelemente, die parallel zueinander beabstandet angeordnet sind. Die Flachfilterelemente sind ausgestaltet als Kissen oder Kassetten, in welchen eine als flexibles Gewebe oder starre Platte ausgebildete Drainagestruktur beidseitig von Filtrationsmembranen umgeben ist. Die Filtrationsmembran ist üblicherweise als zweischichtige Verbundstruktur aus einem Trägervlies und einer porösen Membranschicht ausgebildet. Die Bereiche zwischen benachbarten Flachfilterelementen bilden Kanäle für eine zu filternde Flüssigkeit, welche gemäß dem Prinzip der sogenannten Cross-Flow-Filtration parallel zur Oberfläche der Flachfilterelemente und damit senkrecht zur Filtrationsrichtung strömt.

Die EP 0 730490 B1 offenbart eine Filterverbundstruktur, die ein poröses Filtermedium, ein poröses Trägermedium und ein Substrat mit Drainagemechanismus umfasst sowie ein Verfahren zur Herstellung der Verbundstruktur. Das poröse Filtermedium und das poröse Trägermedium sind mit dem Substrat mithilfe eines Lösungsmittels derart verbunden, dass die Permeabilität des Filtermediums nicht wesentlich vermindert ist. In bevorzugten Ausführungsformen besteht das Substrat aus einem polymeren Material und weist Nuten auf, wobei der Bereich zwischen benachbarten Nuten mit dem porösen Trägermedium verklebt ist. In einer weiteren Ausführungsform ist das Substrat als ein Blatt oder eine Platte mit gegenüberliegenden ebenen Oberflächen ausgebildet, wobei jede ebene Oberfläche mit einem porösen Trägermedium und einem porösen Filtermedium lösungsmittelgeklebt ist. Die Herstellung der Verbundstrukturerfolgt nach einem Verfahren, das folgende Schritte umfasst:
- das poröse Filtermedium, das poröse Trägermedium und das Substrat werden überlagert;
- eine Bindemittelzusammensetzung wird zugeführt, die lediglich das Substrat geringfügig löst und das poröse Trägermedium und das poröse Filtermedium durchsetzt, wobei gelöstes Substrat eingetragen wird, welches sich nach Entfernen der Bindemittelzusammensetzung verfestigt und die drei Schichten miteinander verbindet.

Die DE 37 12 872 A1 beschreibt Filterelemente, die aus einer Membran und einer durchströmbaren Drainagestruktur zusammengesetzt sind. Die Drainagestruktur besteht aus einem Gewebe, einem Vlies, einer gelochten oder geprägten Folie oder einer Kombination dieser Schichtmaterialien. Die im wesentlichen flachen Filterelemente von n-eckigem oder rundem Zuschnitt weisen eine Durchbrechung zur Fluidführung auf und sind randseitig und um den Durchbruch herum leckdicht verklebt oder verschweißt. In besonderen Ausführungsformen ist die Membran ein- oder beidseitig flächig haftend in Form eines Laminats mit einem Gewebe und/oder einem Vlies verbunden. Hierbei ist das Gewebe/Vlies jeweils nur mit einer Membran verbunden.

Das deutsche Gebrauchsmuster DE 20 2005 012 047 U1 offenbart ein zwei- oder mehrschichtiges Verbundfiltermedium zum Entfernen von Partikeln aus einem Fluidstrom, umfassend eine Membranfiltrationsschicht und mindestens eine hierzu stromaufwärts angeordnete Tiefenfiltrationsschicht. Optional kann das Verbundfiltermedium eine Stützschicht umfassen, welche auf der stromauf- oder stromabwärts befindlichen Seite der Membranfiltrationsschicht angeordnet ist. Optional kann die Stützschicht mit der Membran laminiert sein. Vorzugsweise bestehen die Tiefenfiltrationsschicht, die Membranfiltrationsschicht und die optionale Stützschicht aus polymerem Meltblown-Polymerfasergewebe, respektive aus gerecktem PTFE-Membranfiltrationsmedium (ePTFE) und aus Spunbond-Vliesstoff. Die optionale Stützschicht ist jeweils nur mit einer Membranfiltrationsschicht verbunden.

Die EP 1 554 028 B1 lehrt ein Filterelement mit mehrschichtiger Faltenabstützung. Das Filterelement umfasst einen stromaufwärts befindlichen Faltenträger, ein Filtermedium, einen mehrschichtigen stromabwärts befindlichen Träger mit einer ersten und zweiten stromabwärts angeordneten Trägerschicht. Das Filtermedium ist typischerweise ein mikroporöses Filtermedium, das eine Porengröße von ungefähr 0,1 µm bis ungefähr 10 µm aufweist und aus herkömmlichen Filtermaterialien wie z.B. expandiertem Teflon, Nylon, Polyethersulfon, Polyvinylidendifluorid und dergleichen besteht. Die Trägerschichten sind vorzugsweise aus polymeren nicht-gewebten Fasermaterialien hergestellt, wobei die erste Trägerschicht mit dem Filtermedium laminiert sein kann. Die Laminierung kann gemäß herkömmlicher, im Stand der Technik bekannter Laminierverfahren durchgeführt werden.

Die EP 0 417 287 B1 beschreibt eine poröse, heterogene Membran aus einem Copolymer auf Phenylensulfidbasis, die auf einen polymeren Webstoff oder ein Vlies auflaminiert ist.

Im laufenden Betrieb eines Filtersystems werden Partikel, deren Durchmesser zu groß ist, um die Poren der Membranschicht zu passieren, auf der Membranoberfläche zurückgehalten und bleiben teilweise haften. Durch Akkumulation solcher Partikel über längere Zeiträume baut sich Filterkuchen auf, der die Membranoberflächen zunehmend verstopft und die Filtrationsleistung des Systems reduziert. Im Rahmen der Anlagenwartung werden die Oberflächen der Filtrationsmembranen regelmäßig mechanisch und/oder chemisch gereinigt und von Filterkuchen befreit, z. B. mittels Bürsten, Wasserstrahl und Reinigungslösungen. Neben diesen aufwendigen und kostenintensiven Reinigungsverfahren, die in der Regel den Ausbau der Filterelemente erfordern, kommt eine in-situ Reinigung mittels Rückspülung in Betracht. Bei der Rückspülung werden die Filterelemente für eine kurze Zeitspanne statt mit Unterdruck mit einem erhöhten Innendruck derart betrieben, dass Flüssigkeit vom Inneren des Filterelements durch die Filtrationsmembranen hindurch nach außen strömt und an der Oberfläche der Filtrationsmembranen anhaftende Partikel ablöst. Diese Rückspülung erfolgt im laufenden Betrieb periodisch, wobei die Periodendauer und das Verhältnis Filtrationszeit zu Rückspülzeit von den aktuellen Filtrationsbedingungen abhängen und die Periodendauer typischerweise zwischen 1 und 300 min, bevorzugt zwischen 5 und 100 min und besonders bevorzugt zwischen 8 und 30 min liegt. Der Reinigungseffekt der Rückspulung hängt maßgeblich von der Kraft ab, die auf anhaftende Partikel einwirkt. Diese Kraft ist eine Funktion des Innendrucks im Filterelement. Durch den erhöhten Innendruck kann das Filterelement beschädigt werden. So werden durch erhöhten Innendruck häufig Risse und Delaminierungen der Filtrationsmembran verursacht. Die Delaminierung kann innerhalb einer Filtrationsmembran zwischen dem Trägervlies und der pörosen Membranschicht oder zwischen der Filtrationsmembran und der Drainagestruktur auftreten. Als Folge einer Delaminierung bläht sich die Filtrationsmembran bzw. die pörose Membranschicht häufig derart stark auf, dass sie gegen ein benachbartes Filterelement drückt, wobei die Rückspülung an den betroffenen Stellen völlig zum Erliegen kommt und der anhaftende Filterkuchen teilweise in die Membranoberflächen gepresst wird.

Um solche Störungen und Schäden zu vermeiden, wird der Innendruck bei der Rückspülung typischerweise auf Werte unterhalb 0,05 bar begrenzt. Eine Erhöhung des Innendrucks auf Werte größer 0,05 bar würde die Effektivität der Reinigung mittels Rückspülung verbessern und die Intervalle für die aufwendige chemomechanische Reinigung verlängern.

Dementsprechend hat die vorliegende Erfindung die Aufgabe, ein Filterverbundmaterial zu schaffen, das kostengünstig herstellbar ist und eine gegenüber dem Stand der Technik verbesserte Rückspülbarkeit aufweist.

Gelöstwird diese Aufgabe durch ein Filterverbundmaterial, umfassend ein Drainagegewebe und eine erste und zweite Filtrationsmembran, die mit der Ober- und Unterseite des Drainagegewebes laminiert sind, wobei die Laminierung zwischen dem Drainagegewebe und den Filtrationsmembranen eine dynamische Druckstabilität von größer 0,15 bar aufweist. In Weiterbildungen der Erfindung hat die Laminierung zwischen dem Drainagegewebe und den Filtrationsmembranen eine dynamische Druckstabilität von größer 0,2 bar, bevorzugt größer 0,25 bar und besonders bevorzugt größer 0,3 bar. Hier und im folgenden bezeichnet der Begriff "dynamische Druckstabilität " die Amplitude des Rückspül-Innendrucks bei wechselnder Belastung zwischen Filtration (Unterdruck) und Rückspülung (erhöhter Innendruck), der ein Filterelement während seines Lebenszyklus ausgesetzt ist. Demgegenüber liegt der Berstdruck (=statische Druckstabilität) des erfindungsgemäßen Filterverbundmaterials bei monotoner bzw. statischer Belastung mit erhöhtem Innendruck deutlich über 1 bar.

In einer vorteilhaften Ausführungsform ist das Filterverbundmaterial bandförmig und hat eine Länge von 5 bis 500 m, bevorzugt 10 bis 100 m und besonders bevorzugt 20 bis 60 m, wobei seine Breite 0,5 bis 20 m, bevorzugt 0,8 bis 10 m und besonders bevorzugt 0,9 bis 2 m beträgt.

Vorzugsweise ist das Drainagegewebe als Abstandsgewirke ausgebildet. Im Stand der Technik bekannte Abstandsgewirke bestehen aus einer ersten und zweiten flächigen Maschenkonstruktion und einem zwischen erster und zweiter Maschenkonstruktion angeordneten Polfadensystem aus Polfäden. Die Polfäden sind räumlich regelmäßig zueinander und in Ketten- oder Schussrichtung der Maschenkonstruktionen angeordnet, wobei jeder Polfaden abwechselnd durch Maschen der ersten und zweiten Maschenkonstruktion geführt ist, derart, dass der Polfaden einen sägezahn- oder spiralförmigen Verlauf aufweist. Als Material für Abstandsgewirke eignen sich Kunststoffe - insbesondere Polyester, sowie anorganische Materialien, wie z.B. Glasfasern oder Metalle. Die Dicke der Maschenkonstruktionen beträgt zwischen 0,1 bis 4 mm und das Polfadensystem ist 0,3 bis 10 mm hoch. Die Maschendichte des Polfadensystems beträgt 100 bis 300 cm⁻² und der Polfaden besitzt ein spezifisches Fadengewicht von 30 bis 100 dtex. Vorzugweise ist das Abstandsgewirke thermisch gehärtet. Die Herstellung von thermisch gehärteten Abstandsgewirken erfolgt in zwei Schritten. Zunächst wird auf einer Wirkmaschine ein Abstandsgewirke mit Polfäden aus einem thermoplastischen Polymer erzeugt, wobei sich die Polfäden lediglich elastisch verformen. Hieran anschließend wird das Abstandsgewirke kurzzeitig erwärmt auf eine Temperatur oberhalb der Glastemperatur des thermoplastischen Polymers, wobei den Polfäden die durch das Wirkmuster vorgegebene sägezahn- oder spiralartige Form aufgeprägt wird. Bei mechanischer Belastung des gehärteten Abstandsgewirkes verformen sich die Polfäden elastisch und nehmen bei Entlastung wieder die aufgeprägte sägezahn-oderspiralartige Form ein. Dementsprechend zeichnetsich das thermisch gehärtete Abstandsgewirke durch erhöhte Steifigkeit und eine Art Formgedächtnis aus.

Das Drainagegewebe und die Filtrationsmembranen sind vorzugsweise mittels Klebenetzen miteinander flächig haftend verbunden. Insbesondere besteht das Klebenetz aus einem thermoplastischen Polymer mit einem Schmelzpunkt im Bereich von 80 bis 200 °C, bevorzugt von 100 bis 180 °C und besonders bevorzugt von 120 bis 160 °C. Klebenetze aus thermoplastischen Polymeren werden beispielsweise mittels Gravurwalzen geformt. Dementsprechend können verschiedenartig gestaltete Maschenmuster erzeugt werden. Die Haftfestigkeit und Druckstabilität einer mittels eines Klebenetzes angefertigten Laminierung wird wesentlich durch die Maschendichte und das Flächengewicht des Klebenetzes bestimmt. Hierbei bezeichnet der Begriff Maschendichte die Anzahl der Öffnungen pro Flächeneinheit des Klebenetzes.

Zur Laminierung des erfindungsgemäßen Filterverbundmaterials werden Klebenetze eingesetzt mit einer Maschendichte von 10.000 bis 400.000 m⁻², bevorzugt 100.000 bis 350.000 m⁻², und besonders bevorzugt 200.000 bis 300.000 m⁻². Hierbei liegt das Flächengewicht des Klebenetzes im Bereich von 10 bis 80 g·m⁻², bevorzugt 20 bis 60 g·m⁻², und besonders bevorzugt 30 bis 50 g·m⁻².

In Weiterbildung der Erfindung besteht die Filtrationsmembran aus einem Trägervlies und einer porösen Membranschicht, wobei das Trägervlies benachbart zum Drainagegewebe angeordnet ist. Die poröse Membranschicht ist durch Nassfällung oder Laminierung mit dem Trägervlies verbunden.

Bei der Nassfällung wird die poröse Membranschicht auf dem Trägervlies abgeschieden, ansonsten auf das Trägervlies auflaminiert.

Vorzugsweise besteht die poröse Membranschicht aus Polyethersulfon, Polysulfon, Polyacrylnitril, Polyvinylidenfluorid, Polyamid, Polyetherimid, Celluloseacetat, Regeneratcellulose, Polyolefin oder Fluorpolymer. Die poröse Membranschicht wird beispielsweise erzeugt, indem ein Vlies oder Gewebe mit Polymerlösung beschichtet und das Polymer in einem nachfolgenden Phaseninversionsschritt ausgefällt wird. Alternativ hierzu wird eine Polymerfolie in geeigneter Weise verstreckt, wobei in der Polymerfolie Poren entstehen. Die verstreckte Polymerfolie wird dann zur mechanischen Stabilisierung auf ein Trägervlies auflaminiert. Nach diesen Methoden hergestellte Filtrationsmembranen sind kommerziell erhältlich, z.B. unter der Bezeichnung NADIR^{®} Membranen (MICRODYN-NADIR GmbH, Wiesbaden) oder Celgard^{®} Flat Sheet Membranes (Celgard Inc., Charlotte, NC, USA).

Eine weitere Aufgabe der Erfindung besteht darin, ein Verfahren zur Herstellung des voranstehend beschriebenen Filterverbundmaterials bereitzustellen. Diese Aufgabe wird gelöst, indem eine erste bandförmige Filtrationsmembran, ein erstes bandförmiges Klebenetz aus thermoplastischem Polymer, ein bandförmiges Drainagegewebe, ein zweites bandförmiges Klebenetz aus thermoplastischem Polymer und eine zweite bandförmige Filtrationsmembran jeweils von einer separaten Vorratsrolle zugeführt und in einen Druckwalzenpaar zu einem bandförmigen Stapel zusammengeführt werden, der bandförmige Stapel in einem beheizten Walzenpaar an seiner Ober- und Unterseite erwärmt und anschließend abgekühlt wird, derart dass das erste und zweite Klebenetz aufschmelzen und anschließend abkühlen, wodurch das Drainagegewebe dauerhaft klebend mit den Filtrationsmembranen verbunden wird.

Im Weiteren hat die Erfindung die Aufgabe ein Flachfilterelement bereitzustellen, das eine gegenüber dem Stand der Technik verbesserte Rückspülbarkeit aufweist.
Diese Aufgabe wird gelöst, indem aus dem voranstehend beschriebenen Filterverbundmaterial ein Zuschnitt mit einer für die jeweilige Anwendung angepassten Geometrie, bevorzugt mit quadratischer, rechteckiger, sechseckiger, ovaler oder runder Form, angefertigt und ringsum randseitig flüssigkeitsdicht versiegelt wird.

Das Versiegeln des Randes erfolgt mittels bekannter Methoden, z.B.
- Verbinden des Drainagegewebes mit den Filtrationsmembranen durch thermisches oder Ultraschall-Schweißen;
- Kleben, wobei in einem Randbereich des Flachfilterelements ein Flüssigkleber zwischen dem Drainagelement und den Filtrationsmembranen eingetragen und gehärtet bzw. vernetzt wird;
- Tauchkleben, wobei ein Randbereich des Flachfilterelements an Ober- und Unterseite sowie an der Schnittfläche bzw. Stoßkante mit einem Kleber beaufschlagt wird;
- maschinelles Vernähen mit einem Faden oder
- durch eine mechanische Klemmvorrichtung.

Sodann werden eine oder mehrere Ablauföffnungen angebracht, indem mit einem mechanischen Schneidwerkzeug oder einem Laser ein Teil einer Filtrationsmembran ausgeschnitten und entfernt wird. Häufig ist es zweckmäßig, eine Ablaufleitung durch ein oder mehrere parallel zueinander angeordnete Flachfilterelemente (Stapelanordnung) hindurchzuführen. Hierzu müssen die Flachfilterelemente beidseitig Ablauföffnungen mit kongruenterflächengleicherGeometrie aufweisen. Hierfürwerden die erste und zweite Filtrationsmembran und gegebenenfalls auch das zwischenliegende Drainagegewebe in der erforderlichen Geometrie ausgeschnitten und entfernt.

Abschließend werden die Ablauföffnungen mit Ablaufleitungen verbunden, vorzugsweise mittels Verklebung.

Die somit erhaltenen Flachfilterelemente widerstehen einem Innendruck von größer 0,15 bar, bevorzugt größer 0,2 bar und besonders bevorzugt größer 0,3 bar unbeschadet bei einer Druckwechselbelastung die den Arbeitsphasen von Filtration und Rückspülung entspricht.

Die Erfindung wird im Folgenden unter Bezugnahme auf die schematischen Darstellungen der Figuren näher beschrieben. Es zeigen:
- Fig. 1: eine teilweise geschnittene perspektivische Ansicht eines Filterverbundmaterials in Explosionsdarstellung,
- Fig. 2: schematisch eine Vorrichtung zur Herstellung eines Filterverbundmaterials, und

- Fig. 3: eine perspektivische Schnittansicht eines Flachfilterelements.

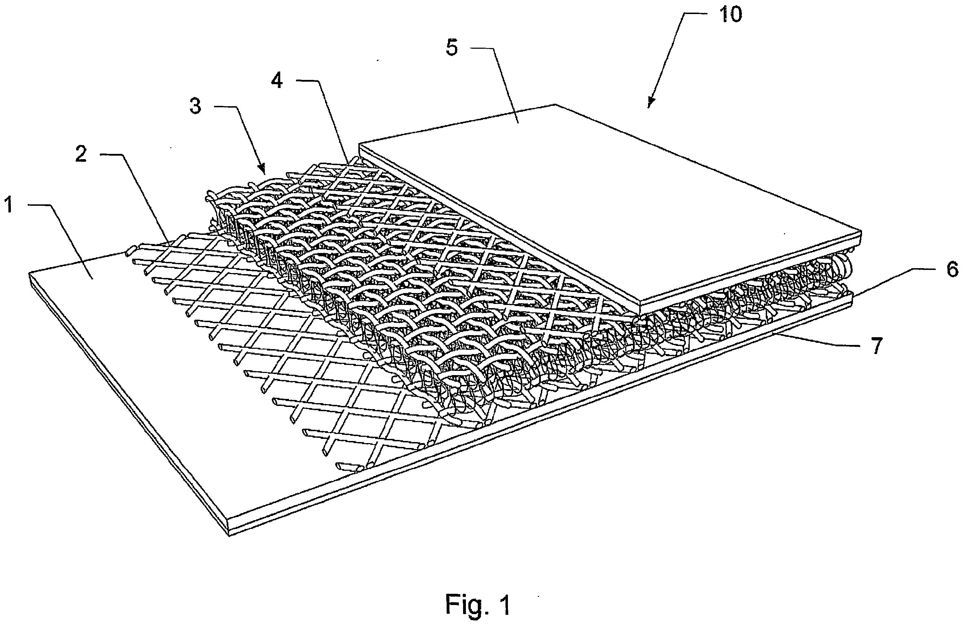

Das in Fig. 1 dargestellte Filterverbundmaterial 10 umfasst eine erste Filtrationsmembran 1, ein erstes Klebenetz 2, das aus einem thermoplastischen Polymer besteht, ein Drainagegewebe 3, ein zweites Klebenetz 4 aus einem thermoplastischen Polymer und eine zweite Filtrationsmembran 5. Die Filtrationsmembranen 1 und 5 sind mit dem Drainagegewebe 3 beispielsweise durch thermische oder Ultraschall-Schweißen, Kleben, maschinelles Vernähen oder mechanisches Klemmen verbunden. Die Verbindungslinien bzw. -nähte sind schematisch durch die Bezugszeichen 6, 7 angezeigt.

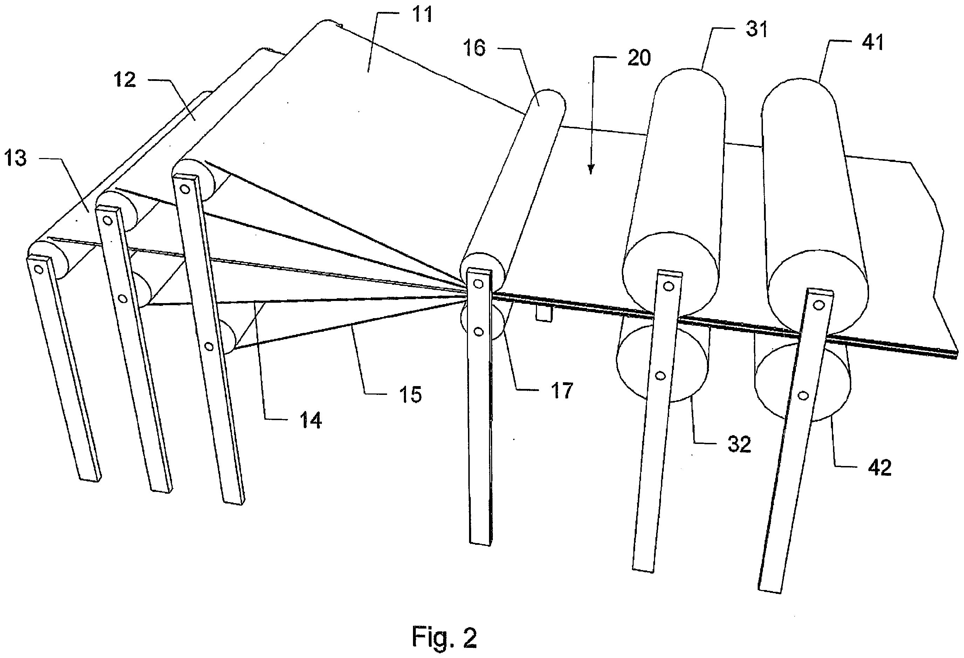

Das in Fig. 1 gezeigte Filterverbundmaterial entsteht aus dem mittels einer in Fig. 2 schematisch dargestellten Vorrichtung gefertigten Endlos-Bahnmaterial 20. Hierzu werden jeweils von Vorratsrollen ein erstes Filtrationsmembranband 11, ein erstes Klebenetzband 12, ein Drainagegewebeband 13, ein zweites Klebenetzband 14 und ein zweites Filtrationsmembranband 15 in einem Paar von Druckwalzen 16, 17 zu einem bandförmigen Stapel zusammengeführt. Dieser Stapel durchläuft ein beheiztes Walzenpaar 31, 32, von dem jede Walze beheizt ist und ein weiteres Druckwälzenpaar 41, 42. Der bandfömige Stapel wird in dem beheizten Walzenpaar an seiner Ober- und Unterseite so stark erwärmt, dass das erste und zweite Klebenetzband 12, 14 punkt- und/oder linienmäßig aufschmelzen bzw. klebrig werden. Durch das Druckwalzenpaar wird ausreichend Druck auf den Stapel ausgeübt, so dass die kurzzeitig aufgeschmolzenen bzw. klebrigen Klebenetzbänder 12,14 das Drainagegewebeband 13 mit den Filtrationsmembranbändern 11,15 verbinden. Die Klebenetzbänder 12,14 kühlen nach dem Austritt aus dem Spalt des Walzenpaares 41, 42 ab und verbinden dadurch dauerhaft und flächig haftend das Drainagegewebeband 13 mit den Filtrationsmembranenbändern zu dem Endlos-Bandmaterial 20. Aus dem Endlos-Bandmaterial 20 werden Zuschnitte mit einer für die jeweiligen Anwendung angepassten Geometrie gefertigt. Die Zuschnitte werden ringsum randseitig flüssigkeitsdicht verschlossen bzw. versiegelt. Einen derartigen Zuschnitt von rechteckiger Form zeigt Fig. 1.

Die beidseitigen punkt- und/oder linienförmigen Verbindungen des Drainagegewebes 13 und der Filtrationsmembranbänder 11, 15 durch die aufgeschmolzenen bzw. klebrigen Klebenetzbänder 12, 14 ergeben eine sehr hohe Druckstabilität des Filterverbundmaterials, da die Anzahl de Verbindungspunkte bzw. -linien sehr groß ist. Wird an ein aus dem Filterverbundmaterial gefertigtes Filterelement ein Innendruck angelegt, so verhindern diese Art der Verbindungen ein Aufblähen des Filterelements, so dass bei der Reinigung benachbarter Filterelemente mittels Rückspülung die benachbarten Filterelemente weder beschädigt werden noch sich gegenseitig blockieren können.

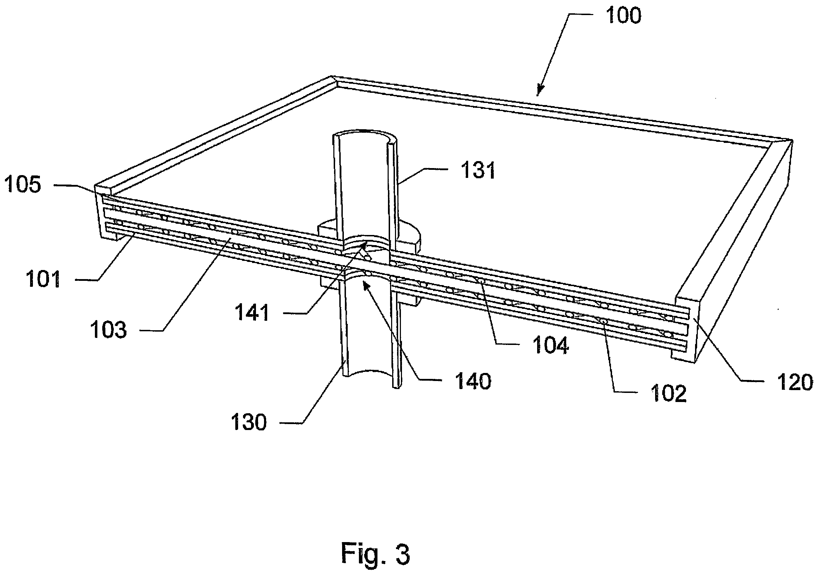

In Fig. 3 ist eine perspektivische Schnittansicht eines Flachfilterelements 100 gezeigt, das kostengünstig aus einem Zuschnitt des in einem quasi-kontinuierlichen Verfahren hergestellten Endlos-Bandmaterials 20 gefertigt ist. Das Flachfilterelement 100 besteht aus einem Rahmen 120, der einen möglichst geringen Strömungswiderstand aufweist. In dem Rahmen 120 sind symmetrisch von außen nach innen zwei Filtrationsmembranen 101, 105, zwei Klebenetze 102, 104 und ein Drainagewebe 103 angeordnet.

In der Gesamtfläche des Flachfilterelements 100 ist eine Abflussöffnung 140 angebracht, die sich über die Dicke des Filterelements 100 erstreckt. Es können auch mehrere Abflussöffnungen 140 vorgesehen werden, die jeweils in gleich großen Flächenbereichen der Gesamtfläche angeordnet sind. Jede derartige Abflussöffnung befindet sich dann im Mittelpunkt des zugehörigen Flächenbereiches.

Die Abflussöffnung 140 ist gegenüber den einzelnen Lagen des Filterelements 100 entlang den Kanten 141 flüssigkeitsdicht versiegelt bzw. verschlossen. Zu beiden Seiten der Abflussöffnung 140 befinden sich Abflussleitungen 130, 131, die für einen weitgehend konstanten transmembranen Differentialdruck des Permeats über das Filterelement 100 sorgen. Dadurch wird ein gleichmäßiges Filterkuchen-Wachstum und damit eine wirtschaftliche Filternutzung erzielt. Dieser Effekt wird beispielsweise durch ein Drainagegewebe unterstützt, dessen Strömungswiderstand mit abnehmendem Abstand von der Abflussöffnung bzw. Abflussleitung kleiner wird. Des Weiteren kann der Strömungswiderstand des Drainagegewebe durch eine Verminderung der Drainagegewebedicke und/oder Reduzierung der Anzahl der Drainagegewebeschichten verringert werden.

## Patentansprüche

1. Filterverbundmaterial (10), umfassend ein Drainagegewebe (3) und eine erste und zweite Filtrationsmembran (1, 5), **dadurch gekennzeichnet, dass** die Filtrationsmembranen (1, 5) mittels Klebenetzen (2, 4) mit der Ober- und Unterseite des Drainagegewebes (3) laminiert sind und dass die Laminierung zwischen dem Drainagegewebe (3) und den Filtrationsmembranen (1, 5) eine dynamische Druckstabilität größer 0,15 bar aufweist,

2. Filterverbundmaterial (10) nach Anspruch 1, **dadurch gekennzeichnet, dass** die Laminierung zwischen dem Drainagegewebe (3) und den Filtrationsmembranen (1, 5) eine dynamische Druckstabilität größer 0,2 bar, bevorzugt größer 0,25 bar und besonders bevorzugt größer 0,3 bar aufweist.

3. Filterverbundmaterial (10) nach Anspruch 1, **dadurch gekennzeichnet, dass** es bandförmig ist und eine Länge von 5 bis 500 m, bevorzugt 10 bis 100 m und besonders bevorzugt 20 bis 60 m aufweist.

4. Filterverbundmaterial (10) nach Anspruch 1, **dadurch gekennzeichnet, dass** es eine Breite von 0,5 bis 20 m, bevorzugt 0,8 bis 10 m und besonders bevorzugt 0,9 bis 2 m aufweist.

5. Filterverbundmaterial (10) nach Anspruch 1, **dadurch gekennzeichnet, dass** das Drainagegewebe (3) als Abstandsgewirke ausgebildet ist.

6. Filterverbundmaterial (10) nach Anspruch 1, **dadurch gekennzeichnet, dass** die Klebenetze (2, 4) aus einem thermoplastischen Polymer mit einem Schmelzpunkt im Bereich von 80 bis 200 °C, bevorzugt 100 bis 180 °C und besonders bevorzugt 120 bis 160 °C besteht.

7. Filterverbundmaterial (10) nach Anspruch 1, **dadurch gekennzeichnet, dass** die Klebenetze (2, 4) ein Flächengewicht von 10 bis 80 g·m⁻², bevorzugt 20 bis 60 g·m⁻², und besonders bevorzugt 30 bis 50 g·m⁻² aufweist.

8. Filterverbundmaterial (10) nach Anspruch 1, **dadurch gekennzeichnet, dass** die Klebenetze (2, 4) eine Maschendichte von 10.000 bis 400.000 m⁻², bevorzugt 100.000 bis 350.000 m⁻², und besonders bevorzugt 200.000 bis 300,000 m⁻² aufweist.

9. Filterverbundmaterial (10) nach Anspruch 1, **dadurch gekennzeichnet, dass** die Filtrationsmembranen (1, 5) aus einem Trägervlies (6) und einer porösen Membranschicht (7) bestehen, wobei das Trägervlies (6) benachbart zum Drainagegewebe (3) angeordnet ist,

10. Filterverbundmaterial (10) nach Anspruch 9, **dadurch gekennzeichnet, dass** die poröse Membranschicht (7) durch Nassfällung mit dem Trägervlies (6) verbunden ist.

11. Filterverbundmaterial (10) nach Anspruch 9, **dadurch gekennzeichnet, dass** die poröse Membranschicht (7) auf das Trägervlies (6) auflaminiert ist.

12. Verfahren zur Herstellung eines Filterverbundmaterials gemäß den Ansprüchen 1 bis 11, wobei eine erste bandförmige Filtrationsmembran (11), ein erstes bandförmiges Klebenetz (12) aus thermoplastischem Polymer, ein bandförmiges Drainagegewebe (13), ein zweites bandförmiges Klebenetz (14) aus thermoplastischem Polymer und eine zweite bandförmige Filtrationsmembran (15) jeweils von einer separaten Vorratsrolle zugeführt und in einem Druckwalzenpaar (16, 17) zu einem bandförmigen Stapel (20) zusammengeführt werden, der bandförmige Stapel (20) in einem beheizten Walzenpaar (31, 32) an seiner Ober- und Unterseite erwärmt und anschließend abgekühlt wird, derart dass das erste und zweite Klebenetz (12, 14) aufschmelzen und anschließend abkühlen, wodurch das Drainagegewebe (13) dauerhaft klebend mit den Filtrationsmembranen (11, 16) verbunden wird.

13. Verwendung eines Filterverbundmaterials nach den Ansprüchen 1 bis 11 zur Herstellung von Flachfilterelementen, indem aus den Filterverbundmaterial ein Zuschnitt mit einer für die jeweilige Anwendung angepassten Geometrie angefertigt und ringsum randseitig flüssigkeitsdicht versiegelt wird.

14. Flachfilterelement aus einem Filterverbundmaterial nach den Ansprüchen 1 bis 11 mit einer quadratischen, rechteckigen, sechseckigen, ovalen oder runden Form.

15. Flachfilterelement aus einem Filterverbundmaterial nach den Ansprüchen 1 bis 11 mit einem durchströmbaren, randseitig flüssigkeitsdicht versiegelten Innenraum, der über eine oder mehrere Abflussöffnungen (140) in dem Filterverbundmaterial mit einer oder mehreren Abflussleitungen (130, 131) verbunden ist.

16. Flachfilterelement nach Anspruch 15, **dadurch gekennzeichnet, dass** es bei wechseinder Druckbelastung einem Innendruck von größer 0,15 bar, bevorzugt größer 0,2 bar und besonders bevorzugt größer 0,3 bar unbeschadet standhält.

## Claims

1. A filter composite material (10) comprising a woven drainage fabric (3) and first and second filtration membranes (1, 5), **characterized in that** the filtration membranes (1, 5) are laminated by means of adhesive nets (2, 4) to the top and bottom sides of the woven drainage fabric (3) and that the lamination between the woven drainage fabric (3) and the filtration membranes (1, 5) has a dynamic pressure stability above 0.15 bar.

2. The filter composite material (10) according to claim 1, **characterized in that** the lamination between the woven drainage fabric (3) and the filtration membranes (1, 5) has a dynamic pressure stability above 0.2 bar, preferably above 0.25 bar and more preferably above 0.3 bar.

3. The filter composite material (10) according to claim 1, **characterized in that** it is ribbon shaped and has a length in the range from 5 to 500 m, preferably in the range from 10 to 100 m and more preferably in the range from 20 to 60 m.

4. The filter composite material (10) according to claim 1, **characterized in that** it has a width in the range from 0.5 to 20 m, preferably in the range from 0.8 to 10 m and more preferably in the range from 0.9 to 2 m.

5. The filter composite material (10) according to claim 1, **characterized in that** the woven drainage fabric (3) is formed as a loop-formingly knitted spacer fabric.

6. The filter composite material (10) according to claim 1, **characterized in that** the adhesive net (2, 4) consists of a thermoplastic polymer having a melting point in the range from 80 to 200 °C, preferably the range from 100 to 180 °C and more preferably the range from 120 to 160 °C.

7. The filter composite material (10) according to claim 1, **characterized in that** the adhesive net (2, 4) has a basis weight in the range from 10 to 80 g·m⁻², preferably in the range from 20 to 60 g·m⁻² and more preferably in the range from 30 to 50 g·m⁻².

8. The filter composite material (10) according to claim 1, **characterized in that** the adhesive net (2, 4) has a mesh density in the range from 10 000 to 400 000 m⁻², preferably in the range from 100 000 to 350 000 m⁻² and more preferably in the range from 200 000 to 300 000 m⁻².

9. The filter composite material (10) according to claim 1, **characterized in that** the filtration membrane (1, 5) consists of a support nonwoven (6) and a porous membrane layer (7), the support nonwoven (6) being disposed adjacent to the woven drainage fabric (3).

10. The filter composite material (10) according to claim 9, **characterized in that** the porous membrane layer (7) is bonded to the support nonwoven (6) by wet coagulation.

11. The filter composite material (10) according to claim 9, **characterized in that** the porous membrane layer (7) is laminated on the support nonwoven (6).

12. A method for producing a filter composite material according to claims 1 to 11, wherein a first ribbon-shaped filtration membrane (11), a first ribbon-shaped adhesive net (12) of thermoplastic polymer, a ribbon-shaped woven drainage fabric (13), a second ribbon-shaped adhesive net (14) of thermoplastic polymer and a second ribbon-shaped filtration membrane (15) are each supplied from a separate stock reservoir reel and combined in a pressure roll couple (16, 17) to form a ribbon-shaped stack (20), the ribbon-shaped stack (20) is heated at its top and bottom sides in a heated roll couple (31, 32) and subsequently cooled such that the first and second adhesive nets (12, 14) melt and subsequently cool, causing the woven drainage fabric (13) to become durably adhesion bonded to the filtration membranes (11, 15).

13. The use of a filter composite material according to claims 1 to 11 in the manufacture of flat filter elements by fabricating from the filter composite material a blank having an appropriate geometry for the particular use and sealing it liquidtight all around edgeside.

14. A flat filter element formed from a filter composite material according to claims 1 to 11 in a square, rectangular, hexagonal, oval or round shape.

15. A flat filter element formed from a filter composite material according to claims 1 to 11 to have a through-flowable interior space sealed liquidtight edgeside and connected via one or more outflow openings (140) in the filter composite material to one or more outflow lines (130, 131).

16. The flat filter element according to claim 15, **characterized in that** under conditions of a varying pressure load it survives an internal pressure of above 0.15 bar, preferably above 0.2 bar and more preferably above 0.3 bar intact.

## Revendications

1. Matériau composite filtrant (10), comprenant un tissu de drainage (3) et une première et une deuxième membrane de filtration (1, 5), **caractérisé en ce que** les membranes de filtration (1, 5) sont stratifiées avec le côté supérieur et le côté inférieur du tissu de drainage (3) au moyen de filets collants (2, 4), et **en ce que** la stratification entre le tissu de drainage (3) et les membranes de filtration (1, 5) présente une stabilité à la pression dynamique supérieure à 0,15 bar.

2. Matériau composite filtrant (10) selon la revendication 1, **caractérisé en ce que** la stratification entre le tissu de drainage (3) et les membranes de filtration (1, 5) présente une stabilité à la pression dynamique supérieure à 0,2 bar, de manière préférée supérieure à 0,25 bar et de manière particulièrement préférée supérieure à 0,3 bar.

3. Matériau composite filtrant (10) selon la revendication 1, **caractérisé en ce qu'**il présente une forme de bande et présente une longueur allant de 5 à 500 m, de manière préférée allant de 10 à 100 m et de manière particulièrement préférée allant de 20 à 60 m.

4. Matériau composite filtrant (10) selon la revendication 1, **caractérisé en ce qu'**il présente une largeur allant de 0,5 à 20 m, de manière préférée allant de 0,8 à 10 m et de manière particulièrement préférée allant de 0,9 à 2 m.

5. Matériau composite filtrant (10) selon la revendication 1, **caractérisé en ce que** le tissu de drainage (3) est réalisé sous la forme d'un maillage d'espacement.

6. Matériau composite filtrant (10) selon la revendication 1, **caractérisé en ce que** les filets collants (2, 4) sont constitués d'un polymère thermoplastique présentant un point de fusion compris dans la plage allant de 80 à 200 °C, de manière préférée de 100 à 180 °C et de manière particulièrement préférée allant de 120 à 160 °C.

7. Matériau composite filtrant (10) selon la revendication 1, **caractérisé en ce que** les filets collants (2, 4) présentent un poids surfacique allant de 10 à 80 g/m², de manière préférée allant de 20 à 60 g/m², et de manière particulièrement préférée allant de 30 à 50 g/m².

8. Matériau composite filtrant (10) selon la revendication 1, **caractérisé en ce que** les filets collants (2, 4) présentent une densité de mailles allant de 10 000 à 400 000 m⁻², de manière préférée allant de 100 000 à 350 000 m⁻², et de manière particulièrement préférée allant de 200 000 à 300 000 m⁻².

9. Matériau composite filtrant (10) selon la revendication 1, **caractérisé en ce que** les membranes de filtration (1, 5) sont constituées d'un non-tissé de support (6) et d'une couche de membrane (7) poreuse, le non-tissé de support (6) étant disposé de manière adjacente par rapport au tissu de drainage (3).

10. Matériau composite filtrant (10) selon la revendication 9, **caractérisé en ce que** la couche de membrane (7) poreuse est reliée au non-tissé de support (6) par précipitation d'humidité.

11. Matériau composite filtrant (10) selon la revendication 9, **caractérisé en ce que** la couche de membrane (7) poreuse est appliquée par stratification sur le non-tissé de support (6).

12. Procédé pour fabriquer un matériau composite filtrant selon les revendications 1 à 11, une première membrane de filtration (11) présentant une forme de bande, un premier filet collant (12) présentant une forme de bande, composé d'un polymère thermoplastique, un tissu de drainage (13) présentant une forme de bande, un deuxième filet collant (14) présentant une forme de bande, composé d'un polymère thermoplastique et une deuxième membrane de filtration (15) présentant une forme de bande étant amenés respectivement depuis un rouleau de réserve séparé et étant assemblés dans une paire de cylindres de pression (16, 17) afin de former un empilement (20) présentant une forme de bande, l'empilement (20) présentant une forme de bande étant chauffé au niveau de son côté supérieur et de son côté inférieur dans une paire de cylindres (31, 32) chauffés puis étant immédiatement après refroidi de telle manière que le premier filet collant et le deuxième filet collant (12, 14) fondent et refroidissent immédiatement après, ce qui permet de relier de manière durable par collage le tissu de drainage (13) aux membranes de filtration (11, 15).

13. Utilisation d'un matériau composite filtrant selon les revendications 1 à 11 pour fabriquer des éléments filtrants plats, en ce qu'une découpe présentant une géométrie adaptée pour l'application respective est confectionnée à partir du matériau composite filtrant et est scellée tout autour côté bord de manière étanche aux fluides.

14. Elément filtrant plat composé d'un matériau composite filtrant selon les revendications 1 à 11, présentant une forme carrée, rectangulaire, hexagonale, ovale ou ronde.

15. Elément filtrant plat composé d'un matériau composite filtrant selon les revendications 1 à 11, comprenant un espace intérieur pouvant être traversé, scellé côté bord de manière étanche aux fluides, lequel est relié à un ou à plusieurs conduits d'évacuation (130, 131) par l'intermédiaire d'une ou de plusieurs ouvertures d'évacuation (140) dans le matériau composite filtrant.

16. Elément filtrant plat selon la revendication 15, **caractérisé en ce qu'**il résiste sans subir de dommages, lors de la contrainte changeante exercée par une pression, à une pression intérieure supérieure à 0,15 bar, de manière préférée supérieure à 0,2 bar et de manière particulièrement préférée supérieure à 0,3 bar.
